# EUROPEAN PATENT SPECIFICATION

(11) **EP 2 140 069 B1**
(45) Date of publication and mention of the grant of the patent: **09.10.2013**
(21) Application number: 07758959.6
(22) Date of filing: 22.03.2007
(51) Int. Cl.: A01M 21/04, B63C 7/16, B63C 11/48, B63C 11/52, A01C 11/00

(54) **APPARATUS, SYSTEM AND METHOD FOR RECOVERY OF ARTIFACTS AND ERADICATION OF INVASIVE SPECIES IN AQUATIC ENVIRONMENTS**
VORRICHTUNG, SYSTEM UND VERFAHREN ZUR GEWINNUNG VON ARTEFAKTEN UND VERNICHTUNG VON INVASIVEN SPEZIES IN WÄSSRIGEN UMGEBUNGEN
APPAREIL, SYSTÈME ET PROCÉDÉ DESTINÉ À LA RÉCUPÉRATION D'OBJETS ET À L'ÉRADICATION D'ESPÈCES ENVAHISSANTES DANS DES ENVIRONNEMENTS AQUATIQUES

(30) Priority: 20.03.2007 US 688860
(43) Date of publication of application: 06.01.2010
(73) Proprietor: Kryzak, Thomas J., Altamont, NY 12009-5708 (US)
(72) Inventor: Kryzak, Thomas J., Altamont, NY 12009-5708 (US)
(74) Representative: Parry, Simon James
(86) International application number: PCT/US2007/064458
(87) International publication number: WO 2008/115235

(56) References cited:
- DE-A1- 2 139 441
- US-A- 3 762 548
- US-A- 4 047 390
- US-A- 4 405 258
- US-A- 4 751 939
- US-A- 4 867 608
- US-A- 5 711 886
- US-A1- 2005 045 556

## Description

### Technical Field

The present invention relates generally to preservation of our natural resources, and more particularly, to an apparatus, system and method for recovery of artifacts and eradication of invasive species in aquatic environments.

### Background of the Invention

It has been found that some naturally occurring bodies of water such as lakes, reservoirs, rivers and streams have become contaminated with chemicals, such as, for example, with polychlorinated biphenyls ("PCBs") or chlorinated dioxins. These same bodies of water may house buried artifacts having historical value, because of which, recovery of the artifacts is desirable.

Alternatively, there have been reports of proliferation of invasive plant species in bodies of water. Zebra mussels, Eurasian watermilfoil, ruffe, and other invasive species pose a severe threat to waters and native aquatic plants and animals. Hydrilla is one example of a very invasive plant found "hitchhiking" on rootstocks of ornamental aquatic plants.

US4047390 discloses a sea tent for isolating from a body of water an area of the bottom and a volume of water extending above the bottom area up to the water surface.

US2005/0045556 discloses an apparatus and system for removal and treatment of contaminated materials on the bottom of a body of water.

There is a need for an apparatus, system and method for eradication of invasive species in aquatic environments.

### Summary of the Invention

A first aspect of the present invention provides an apparatus, cradicating invasive species, comprising: an elongate flexible bladder blanket divider having first and second ends; and an open bore vertical support operably coupled to the first and second ends; wherein each end extends into the open bore vertical support and rests on at least one apron bladder of an apron bladder bundle, and wherein the at least one apron bladder is contained in the open bore vertical support and at least one apron bladder is between the end of the vertical support and the bottom of the body of water.

A second aspect of the present invention provides a method of eradicating invasive species in contaminated bottoms of a body of water, comprising: providing an apparatus comprising: an elongate flexible bladder blanket divider having first and second ends; an open bore vertical support operably coupled to the first and second ends; wherein each end extends into the open bore vertical support and rests on at least one apron bladder of an apron bladder bundle, wherein the at least one apron bladder is contained in the open bore vertical support and at least one apron bladder is between the end of the vertical support and the bottom of the body of water so that the at least one apron bladder releasably forms a seal with the bottom of the body of water; resuspending contaminated sediment inside the apparatus; and removing the resuspended contaminated sediment, resulting in lowering the elongate flexible bladder blanket divider so that chemicals may be introduced using chemical injectors to eradicate the invasive species.

A third aspect of the present invention provides a system for eradicating invasive species in contaminated bottoms of a body of water, comprising: a water craft; an apparatus comprising: an elongate flexible bladder blanket divider having first and second ends; an open bore vertical support operably coupled to the first and second ends; wherein each end extends into the open bore vertical support and rests on at least one apron bladder of an apron bladder bundle, wherein the at least one apron bladder is contained in the open bore vertical support and each apron bladder is between the end of the vertical support and the ground, and wherein the barge comprises a mechanical device for raising or lowering the apparatus.

There is also proposed a method for controlling invasive organisms such as milfoil, zebra mussels, certain plants that grow out of control, comprising: providing an apparatus having variable volume first and second compartments separated by a flexible bladder blanket divider, wherein the volume of the second compartment decreases when the bladder blanket divider is moved toward a bottom of the body of water; and introducing chemicals, accelerators, decelerators, feeding, starving, precluding light or suffocating agents through openings in the bladder to control the growth of or kill the invasive organisms.

### Brief Description of the Drawings

FIG. 1 illustrates a front cross-sectional view of an apparatus for recovery of artifacts and eradication of invasive species in aquatic environments, the apparatus comprising a flexible bladder blanket divider, according to embodiments of the present invention;

FIG. 2 depicts a front cross-sectional view of the elongate flexible bladder blanket divider of FIG. 1, showing exploded views of devices inserted through the elongate flexible bladder blanket divider, according to embodiments of the present invention;

FIG 6 depicts a front cross-sectional view of an apparatus for recovering historical artifacts, eradicating invasive species, or restoring plant life, according to embodiments of the present invention;

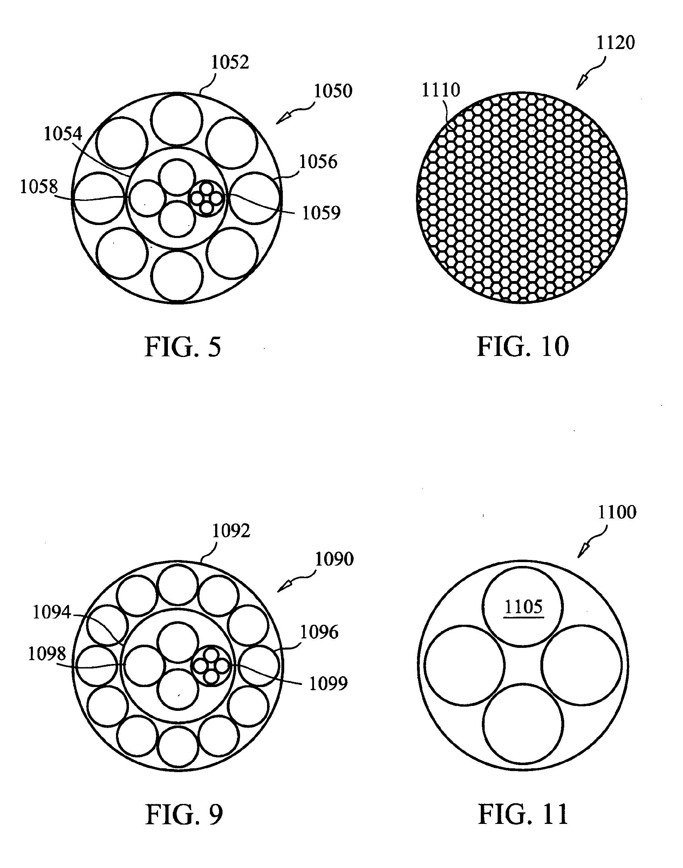

FIGS 5, 9, 10, and 11 depict front cross-sectional views of the interlinking network of reinforcing bundles FIG. 7 illustrates a flow chart of a method for operating the planting systems, according to embodiments of the present invention; and

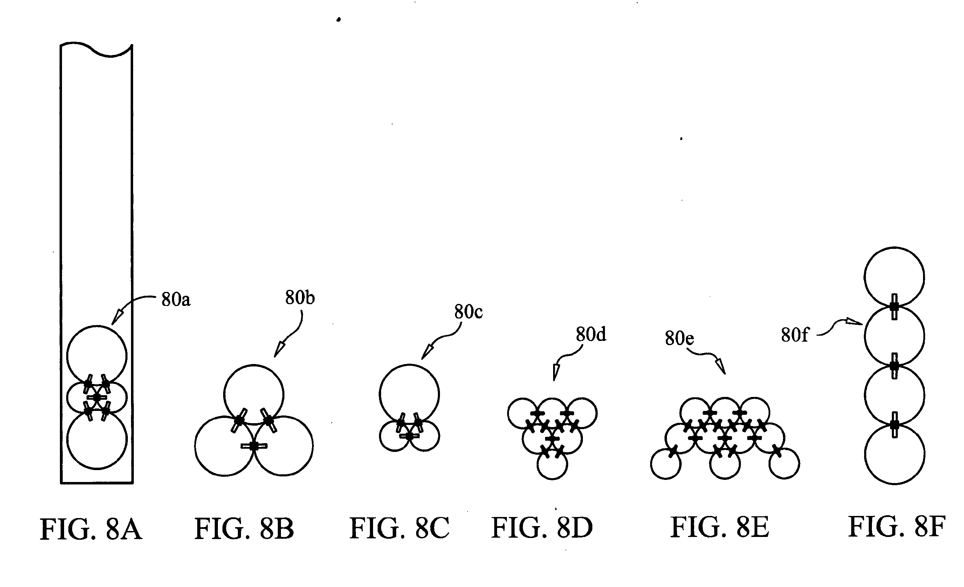

FIGS 8a-f depict a front cross-sectional view of the apron bundles configured into Frame Apron Bladder Bundles (FABBs), according to embodiments of the present invention.

### Detailed Description of the Invention

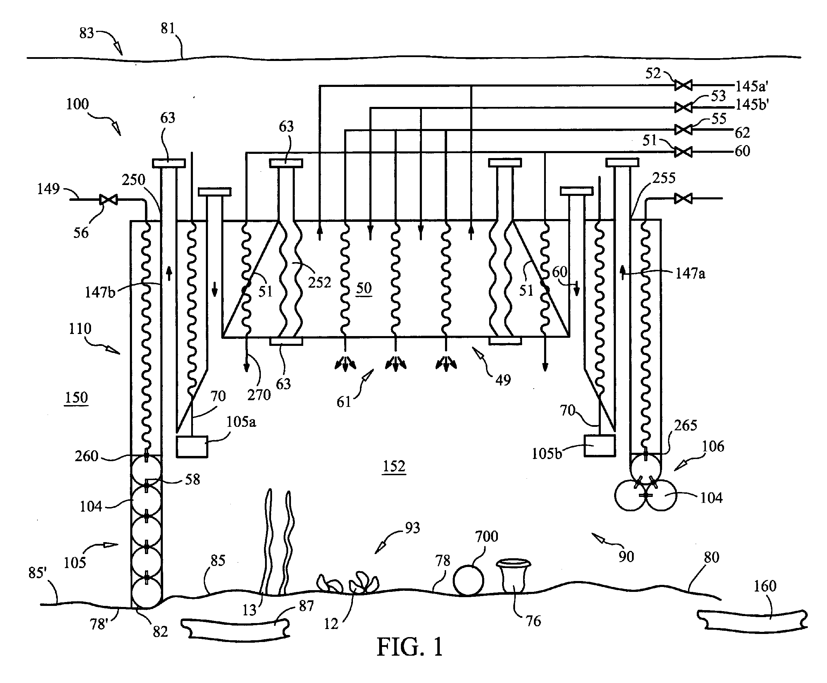

FIG. 1 illustrates a front cross-sectional view of an apparatus **100**, such as a "Boxplorer" System to aid in the use of an Archaeological Investigative Research & Artifact Recovery tool **110** (AIR & ART) known as the Archaeological Box Explorer (ABE), wherein an open side **90** of the tool **110** may be facing a bottom **80** of the body of water **83**, and an edge **82** of an apron bladder **104** of an apron bladder bundle **105** of the tool **110** may be directly and physically in contact with the bottom **80** of the body of water **83**, so that the contained area of water and suspended sediment **152**, the contained precipitated sediment **78** and the contained mud **85** may be essentially completely isolated or separated from an uncontained area of water and suspended sediment **150**, and the precipitated sediment **78'** and the uncontained mud **85'** outside the tool **110**. The body of water **83** comprises a surface **81**, water and suspended sediment **150** and the bottom **80** of the body of water **83**, wherein the bottom **80** of the body of water **83** may include sediment **78'**, mud **85'** and bedrock **87** and may be adjacent to a body of land **160**, such as, for example, a water along a shore, water along an edge of a river, water along an edge of a lakefront, or water along an edge of a beach. The contained precipitated sediment portion **78** and an uncontained precipitated sediment portion **78'**, may be, for example, contaminated material, the contained mud portion **85** and the uncontained mud portion **85'** may be a mixture of earth and water so as to be adhesive, and the bedrock portion **87** may be rock, shale or other hard material that supports the mud, **85** and **85'** and/or sediment, **78** and **78'**. In some cases, some or all of the contained sediment portion **78** and uncontained sediment portion **78'**, and/or the contained mud portion **85** and the uncontained mud portion **85'** of the bottom **80** of the body of water **83** may contain levels of chemical contamination, such that the levels of chemical contamination may be unhealthful or toxic to people, wildlife, such as fish, or plant life living in the body of water **83**. The chemical contamination may be heavy metals such as mercury, lead, or other metals such as chromium, magnesium, manganese, copper, or organics, such as polychlorinated biphenyls (PCB's), dioxins, or halogenated or aromatic solvents such as trichloroethylene, toluene or benzene. Said levels may be as low as 0 to 100 parts per trillion by weight, for example, or at the minimum detection limit of modern analytical instruments for quantifying the level of chemical contamination. In cases for which the levels of contamination may be unhealthful or toxic, it may be desirable or necessary to remove the chemically contaminated portions from the bottom **80** using the apparatus **100** as depicted in FIG. 1.

The tool **110** may comprise: viewing devices **105a** and **105b**, such as waterproof cameras, may be used to display the contained area of water and suspended sediment **152**. The tool **110** may be a Bladder Boundary System (BBS) or any other appropriate container having water-proof walls. The tool **110** uses Bladder Sheets (BSS) **50** capable of flexing and shaping to hold artifacts **76** which may have historical or antique value in place. The Bladder Sheets (BBS) may have multiple layers **51** that comprise a flexible bladder blanket divider **49**. In one embodiment, the Bladder Apron(s) **104** may advantageously rely on a Apron Bladder Bundle(s) **105**, **106**, such as the Soft Touch Union Bladder System (STUBS) to help form a constant, surface conforming, load balancing soft bladder seal with the bottom **80** of the water bed. Hereinafter, "bladder" is defined as a distensible, flexible membrane or sac containing a liquid having a density greater than the fluid in the body of water **83** or an interlocking internal (endoskeletal) network that helps the bladder retain a solid shape while also having a flexible shape. The bundles **105**, **106** may be configured into Frame Apron Bladder Bundles (FABBs), such as High Rise **80a** and **80f**, A-Frame **80b**, A-Frame Mixed **80c**, V-Framed **80d**, M-Framed **80e** designed for "soft touching" the bottom **80** of the body of water such as a sea bed, as depicted in FIGS 8A - 8F and described in associated text.

The Apron bladder(s) **104** or the elongate flexible bladder blanket divider **49** may be made of flexible material selected from the group consisting of polyurethane polymers, silicone polymers, polyester polymers, polystyrene polymers, natural or synthetic rubber, high or low density polyethylene, high or low density polypropylene, and polyamide polymers. The apron bladder(s) **104** may have any appropriate solid geometric shape such as polygon, cubic, cylindrical, spherical, pyramidal, rhomboid or conical. The BBS may shrink the area beneath the elongate flexible bladder blanket divider **49** (Bladder Sheets (BBS)) and reduces the quantity of water to be handled when recovering an artifact **76**. In one embodiment, the BBS reduce the quantity of water to be filtered within a contaminated site during artifact **76** recovery by deflating the apron bladders **104** of the BBS by removing the fluid via pipe **149** by opening valve **56**. In one preferred embodiment, the apron bladders **104** may be intercommunicating through intercommunicating tubes **58**, so that the pressure within the apron bladders **104** is self-equalizing, thereby enabling "soft touching" the bottom **80** of the body of water such as a sea bed, as depicted in FIGS 8A - 8F and described in associated text. Conduits **70** may house coaxial cables or other appropriate wiring to supply the viewing devices **105a** and **105b** with electricity and to provide a data highway over which pictures of a contained area **93** of artifacts **76** and/or invasive species **12**, **13** may be projected to another location for remote viewing. The invasive species **12** may be Zebra Mussels, or **13** Eurasian watermilfoil, ruffe, and other invasive species pose a severe threat to waters and native aquatic plants and animals. Hydrilla is one example of a very invasive plant found "hitchhiking" on rootstocks of ornamental aquatic plants. In addition, the viewing devices **105a** and **105b** may be equipped with lights for illuminating the contained area **93**, such as waterproof electrically powered lights or with light sticks that may be illuminated by chemiluminescence.

The apparatus **100** may be a Suspension Active Mining Process for excavating the contained precipitated sediment portion **78**, comprising water/air return **145a'** via valve **52**, water/air supply **145b'** via valve **53** respectively, water/air Jets **62** to agitating devices **61** via a valve **55**, and additive site **60**, such as a chemical injection system **120**, **121**, through chemical injector(s) **270** via a valve **51**.

The apparatus **100**, such as the Suspension Active Mining Process excavates the contained precipitated sediment portion **78** surrounding the artifacts **76** by putting the contained precipitated sediment portion **78** into suspension so that the contained suspended water and sediment **152** results. The apparatus **100**, such as the Suspension Active Mining Process uses agitating devices **61**, such as jets, augers, props, pumps whips and transports via pipe lines **147a** and **147b** the suspended contained water and sediment to be processed by the closed-loop piping apparatus **100** or open loop piping apparatus **200** disclosed in US Patent Application S/N 10/918,257, authored by the same inventor, Thomas J. Kryzak, as the current application.

The apparatus **100**, such as the General Exploration Advanced Research System (GEARS) uses the Dive Inspection Visual Exploration System (DIVES), the Dive Integrated Mechanical Extraction System (DIMES), and the Alternative Recovery Method System (ARMS) together with the Granting earth Box (GEB). The DIVES uses the GEB's light weight, clear view, screen vision camera **105b** for "hands on" artifact **76** recovery. The DIMES uses the GEB's "mechanical tools" **116** to retrieve artifacts **76** by but not limited to drilling, coring sawing, grinding, impacting, blasting or jetting delivery techniques using air, gases, bubbles, chemicals, materials, water or other appropriate substances or combinations. The ARMS uses the apron bladder bundle **105**, **106**, such as the GEB's Bladder Order System to infiltrate, surround and/or support the artifacts **76** with the Bladder Inflating Net System (BINS).

Referring to FIG. 1, the apparatus **100** may be recharged with uncontaminated water from an independent water supply other than the body of water **83** (not shown) via intake pipes **60**. Intake pipes **60** and transporting pipes **147a** and **147b** may be opened for use by removing hatches **63**.

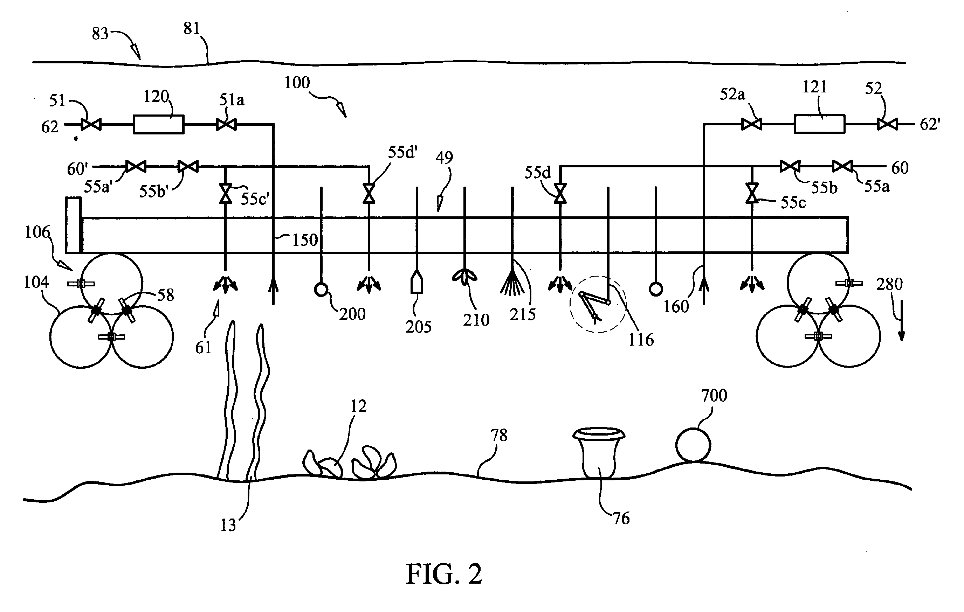

FIG. 2 depicts a front cross-sectional view of the elongate flexible bladder blanket divider **49** of FIG. 1, showing exploded views of the agitating devices **210**, **215, 61**, recovery devices **216**, or processing devices **120** and **121** or sample sites(s) **105** having been inserted into the elongate flexible bladder blanket divider **49** of the apparatus **100**. Processing devices **120** and **121** for adding chemical additives to exterminate invasive species **12** or **13** comprise adder ports **62** and **62'** introducing chemical additives such as chlorine, hydrogen peroxide, accelerators, decelerators, feeding, starving, precluding light or suffocating agents through openings or pipes **150** and **160** in the bladder to control the growth of or kill the invasive organisms. The processing devices **120** and **121** comprise control valves **51**, **51a** and **52** and **52a** respectively for starting and stopping flow into the processing devices **120** and **121**. The apparatus **100** comprises a water/air supply **60** and **60'** for supplying water/air to agitation devices **61** via pipes **55a'-c'**, and **55a-c** respectively, said pipes have been inserter through the elongate flexible bladder blanket divider **49**. The sample site **205** may be used for taking samples for analysis of the level of contamination of the contained water and suspended sediment **152** and for inserting growth packets **700** for revegetation. Alternatively, the growth packets **700** may be introduced through hatch **63** of growth packet introduction system **252**. The growth packets **700** are depicted in FIG. 7, *infra,* and described in associated text and have been previously disclosed in US Patent Application S/N 10/918,257, cited herein, authored by the same inventor, Thomas J. Kryzak.

FIGS 1-2 and 6 depict a front cross-sectional view of the Stretch Exploration Process (SEP) also offers the Aquatic Controlled Eradication Systems (ACES). The Controlled Invasive Species Travel System (CISTS) uses the Controlled Aquatic Vegetation Eradication System (CAVES) along with the Bladder Boundary System (BBS) to protect native species from displacement and destruction. The Soft Touch Union Bladder System protects the bottom **80** of the body of water **83** (e.g. sea bed) during project work and enables the use of Species Life Cycle Catalysts (LCCS). As LCCS accelerators or decelerators, additives or stabilizers, inhibitors, reducers, eliminators, produce a profound effect on the preservation of native species. This feeding or starving with light, CO₂, oxygen, water movement, chemicals, microbes of algae can either enhance or suffocate life. The "Closed Loop Piping System", i.e. the apparatus **100** disclosed in US Patent Application S/N 10/918,257, authored by the same inventor, Thomas J. Kryzak, as the current application can filter in or out life to the selected species. In areas where the invasive species **13** has been annihilated new introductions of native species can be reintroduced using the SEP to protect, promote, feed, water, energize, and advance growth.

In the step **620** of the method **600**, recovering historical artifacts **76**, eradicating invasive species **12**, **13**, or revegetating plant life in contaminated bottoms **80** of a body of water **83**, comprising: providing an apparatus **100** comprising: an elongate flexible bladder blanket divider **49** having first and second ends **250**, **255**; an open bore vertical support **110** operably coupled to the first and second ends **250**, **255**; wherein each end **250**, **255** extends into the open bore vertical support **110** and rests on at least one apron bladder **104** of an apron bladder bundle **105**, **106**, wherein the at least one apron bladder **104** is contained in the open bore vertical support **110** and at least one apron bladder **104** is between the end **260**, **265** of the vertical support and the bottom **80** of the body of water **83** so that the at least one apron bladder **104** releasably forms a seal **82** with the bottom **80** of the body of water **83**;

In the step **640** of the method **600**, resuspending contained water and contaminated sediment **152** inside the apparatus; and

In the step **660** of the method **600**, removing the contained water and contaminated sediment **152**, resulting in lowering the elongate flexible bladder blanket divider **49** so that the historical artifact **76** may be extracted with a robotic arm **116**, chemicals may be introduced using chemical injector(s) **270** to eradicate the invasive species **12**, **13**, or growth packets **700** may be introduced using the sample site **205** or growth packet introduction system **252** to revegetate the bottom **80** of the body of water **83**. Hereinafter, "revegetate" is defined as to replant native species in place of invasive plant species.

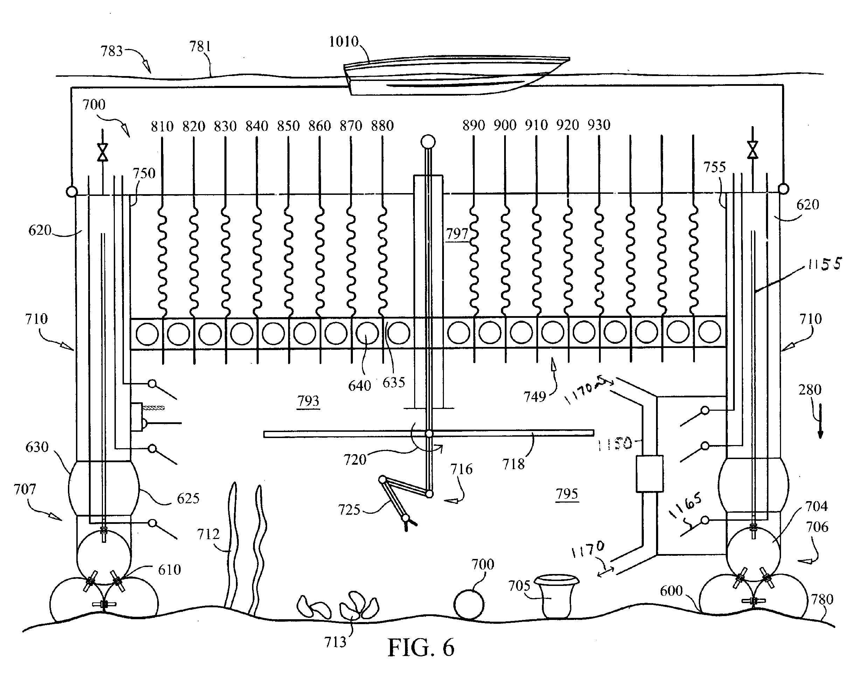

The tool **110** may be "lowered" into position in the direction of the arrow **280** depicted in FIGS. 2 and 6, by mechanical or other means, in accordance with the step **660** of the method **600**, as described *infra,* and depicted in FIG. 2. By introducing air/water/materials into the interior **50** of the tool **110,** as described in the step **660** of the method **600**, the elongate flexible bladder blanket divider **49** may be moved deeper into the bottom **80** of the body of water **83**, resulting in creating a releasable seal **82** at the edge **78'** of the vessel **110**, that may be formed from sediment **78'** and mud **85'** of the bottom **80** outside of the vessel **110** pressing against the edge **78'** and either sediment **78**, mud **85** or the bedrock **87**, depending on how deep the vessel **110** was driven. The releasable seal **82** thereby may isolate the interior **93** from the water **150**, and/or the bottom **80** of the body of water **83**, that may be outside the vessel **110**.

In the providing step **620** of the method **600**, the tool **110** may be partially submerged or completely submerged below the surface **81** of the body of water **83**, as long as the edge **78'** directly and physically contacts the bottom **80** of the body of water **83**.

In the resuspending step **640** of the method **600**, agitating devices **61,** such as augers, spray heads, whips, props, fluid and gas distribution devices, etc. may provide agitation of the interior **93** of the tool **110**, resulting in suspending a portion or essentially all of the bottom material, e.g., **78**, or **85** of the bottom **80** that may be contained in the interior **93** of the tool **110**, wherein the suspended portion may include the contaminated material. The contaminated material may be a range from 0 - 100 percent by weight of the total material of the bottom **80** in the interior **93** of the vessel **110**.

In the step **640**, a rate of agitation necessary to suspend the contaminated material, for example, in locations around the artifact **76** may be empirically determined, based on the weight percent of the bottom material targeted for removal, wherein higher agitation may be needed to suspend more of the portion of the bottom **80** having contaminated material. The contaminated suspended material in the water and suspended material **152** may be conveyed through the "closed loop" piping system or "open loop" piping system to a processing system **140** such as a filter system having in-line chemical testing equipment in order to identify the suspended materials that may be contaminated and to separate them from a fluid such as water in the suspended material and water **152**, as disclosed in US Patent Application S/N 10/818257 and hereby incorporated by reference.

In an embodiment of the method **600**, in the step **620**, video monitoring using devices **820**, **850** and **910**, the lowering of the elongate flexible bladder blanket divider **749** so that the devices **820**, **850** and **910** visualize the contours of a bottom of a body of water **780**, wherein the contours are created by objects selected from the group consisting of historical artifacts, metal drums, rocks, debris, wherein said visualization of the contours of the bottom of the body of water enables an operator of the apparatus to lower the elongate flexible bladder blanket divider **749** to a distance within from about 1 inch or greater of the objects without touching the object.

In an embodiment, removing the resuspended contaminated sediment **795** results in greater than 95 percent by weight removal of the chemical contamination or greater than 95 percent by weight eradication of the invasive species **712**, **713**.

In an embodiment, introducing chemicals, accelerators, decelerators, feeding, starving, precluding light or suffocating agents through openings in the bladder controls the growth of or kills the invasive species **712**, **713**.

FIG 6 depicts a front cross-sectional view of an apparatus for recovering historical artifacts **705**, eradicating invasive species **712**, **713**, or restoring plant life with, for example, growth packets **700**, comprising: an elongate flexible bladder blanket divider **749** having first and second ends, **750**, **755**; and an open bore vertical support **710** operably coupled to the first and second ends **750**, **755**; wherein each end **750 755** extends into the open bore vertical support **710** and rests on at least one apron bladder **704** of an apron bladder bundle **706**, **707**, and wherein the at least one bladder **704** is contained in the open bore vertical support **710** support and at least one apron bladder **704** is between the end **750**, **755** of the vertical support **710** and the bottom **780** of the body of water **783**.

The apparatus **700** comprises a recirculating/heating/cooling tube bundle **1150**. The tube bundle **1150** may be a recirculating heat exchanger capable of controlling the temperature of the contained water and resuspended sediment **795** in the second compartment **793** from about 5°C to about 50°C. Arrows **1170** show fluid from the second compartment **793** recirculates in and out of the recirculating/heating/cooling tube bundle **1150**. The apparatus **700** may comprise agitation devices **1165** which may eject air/water supplied by feed lines **1160**.

FIG 6 depicts a front cross-sectional view of the interior **635** of the elongate flexible bladder blanket divider **749** comprises an interlinking network of reinforcing bundles **640**.

In one embodiment, the apparatus **700**, comprising a recovery device, **716**, a eradicating device **890**, or a revegetation device **930** selected from the group consisting of GPS **900**, lights, **810**, monitoring **820**, sonar **830**, radar **840**, cameras **850**, chemical injectors **860**, robotic calipers **716**, agitating devices **870**, augers **880**, drill heads **890**, suction devices **900**, video monitoring devices **910**, and nozzles **920**, inserted through the elongate flexible bladder blanket **749**.

FIG. 6 depicts a recovery device **716**, such as robotic calipers **725** for grasping artifacts **705**. The recovery device **716** may slide longitudinally along gantry **718**, and pivot from about 0 to about 360° in the direction of arrow **720**. The robotic caliper comprises an electrode for carbon arc gouging, an underwater torch, an underwater heat cauterizer for ballistically heating to destroy underwater vegetation, a shovel, a drill, core maker, a lazer for precision cutting metal, artifacts, vegetation, glass, stone, a chipper blade attachment, a saw, a vibrator for cleaning fine debris off artifacts, a light, a camera, a sonar transmitter/receiver, x-ray or magnetic metal detector, a screen for segregating and isolating small objects having diameters from about 0.1mm and greater from smaller objects.

In one embodiment, the apron bladders **704** contain an intercommunicating fluid that is denser than the fluid of the outside environment so that the apron bladders **704** sink to the bottom **780** of the body of water **83** and conform to the contours of the bottom **80** of the body of water **83**, thereby forming a releasable seal **600** between the apron bladders **704** and the bottom **780** of the body of water **783**. The intercommunicating fluid may be changed to the apron bladders **704** through feed tubes **1155**.

In one embodiment, the fluid is a slurry mix having a density greater than the fluid of the body of water **83** so that transferring the slurry mix into the apron bladders through intercommunicating tubes **610** causes the apron bladder bundles **706**, **707** to become heavier than the fluid of the body of water **83** so the bladder bundles**706**, **707** rest on the bottom **780** of the body of water **783**.

In one embodiment, the video monitoring device **820** or camera **850** visualizes the contours of a bottom **80** of the body of water **83**, wherein the contours are created by objects selected from the group consisting of historical artifacts, metal drums, rocks, debris, wherein said visualization of the contours of the bottom **780** of the body of water **783** enables an operator of the apparatus **700** to lower the elongate flexible bladder blanket divider **749** in a direction of the arrow **280** to a distance within from about 1 inch or greater of the objects without touching the object.

In one embodiment, the temperature of the environment inside **793** the apparatus **700** is increased or decreased relative to the outside temperature by introducing heating or refrigerating fluids or gases into the open bores **620** of the at least one vertical support **710**.

In one embodiment, an inner **625** or outer **630** hatch door opens into the interior of either vertical support to provide access into the apparatus **700**, including the apron bladders **704**.

In one embodiment, the interior **635** of the elongate flexible bladder blanket divider **749** comprises an interlinking network of reinforcing bundles **640**.

In one embodiment, the interlinking network of reinforcing bundles **640** have a shape selected from the group consisting of polygon, cubic, cylindrical, spherical, pyramidal, rhomboid or conical, and combinations thereof.

FIGS 5, 9, 10, and 11 depict front cross-sectional views of the interlinking network of reinforcing bundles **1050**, **1090**, **1120**, and **1100**. The reinforcing bundles**1050**, **1090**, **1120**, and **1100** may be solid tubular structures to form a honeycomb reinforcing structure **1120** such as the bundles **1110,** depicted in FIG. 10. Alternatively, they may be hollow tubes **1105**, **1096**, **1056,** as in FIGS. 11, 9 and 5. The tubes **1096** and **1056** may be arranged in concentric rings as in FIGS. 5 and 9. Generally, the greater number of tubes leads to a stronger, but less flexible bundle. The bundles may be made using nano technology in which the tubes may be hollowed out by a chemical reaction such as selective oxidation.

In one embodiment, the elongate flexible bladder blanket divider **749** is made of a material selected from the group consisting of polyurethane polymers, silicone polymers, polyester polymers, polystyrene polymers, natural or synthetic rubber, high or low density polyethylene, high or low density polypropylene, and polyamide polymers.

In one embodiment, the eradicating device **890** is at least one chemical injector **860** for controlling the growth of the invasive species **712**, **713**, in the body of water **783** selected from the group consisting of invasive plant species, zebra muscles and combinations thereof.

In one embodiment, the invasive species are selected from the group consisting of toxic caulerpa taxifolia, loosestrife, milfoil, ruffe and hydrilla.

In one embodiment, the recovery device **716** is a robotic caliper for removing the historical artifact from the body of water.

In one embodiment, the robotic caliper comprises an electrode for carbon arc gouging, an underwater torch, an underwater heat cauterizer for ballistically heating to destroy underwater vegetation, a shovel, a drill, core maker, a lazer for precision cutting metal, artifacts, vegetation, glass, stone, a chipper blade attachment, a saw, a vibrator for cleaning fine debris off artifacts, a light, a camera, a sonar transmitter/receiver, x-ray or magnetic metal detector, a screen for segregating and isolating small objects having diameters from about 0.1mm and greater from smaller objects.

In one embodiment, the revegetation device **930** is a nozzle **920** for planting a growth packet **700** in the bottom of the body of water.

In an embodiment, the apparatus **700** includes a system for recovering historical artifacts, eradicating invasive species, or restoring plant life in contaminated bottoms of a body of water, comprising: a water craft **1000** and a mechanical lifting device **1010**; and the apparatus **700**.

In an embodiment, a method **800** for controlling invasive organisms such as milfoil, zebra mussels, certain plants that grow out of control, comprising: providing an apparatus **700** having variable volume first and second compartments **793**, **797**, separated by a flexible bladder blanket divider **749**, wherein the volume of the second compartment **793** decreases when the bladder blanket divider is moved in a direction of the arrow **280** toward a bottom **780** of the body of water **783**; and introducing chemicals, accelerators, decelerators, feeding, starving, precluding light or suffocating agents through openings in the bladder to control the growth of or kill the invasive organisms.

While particular embodiments of the present invention have been described herein for purposes of illustration, many modifications and changes will become apparent to those skilled in the art. Accordingly, the appended claims are intended to encompass all such modifications and changes as fall within the scope of this invention as defined in the claims

## Claims

1. An apparatus (100) for eradicating invasive species, comprising:
an elongate flexible bladder blanket divider (49) having first and second vertical ends (250, 255); and
an open bore vertical support (110) operably coupled to the first and second vertical ends (250, 255); and being **characterised in that** each vertical end extends into the open bore vertical support and rests on at least one apron bladder (104) of an apron bladder bundle (105), and
wherein the at least one apron bladder (104) is contained in the open bore vertical support and each apron bladder (104) is between the vertical ends (250, 255) of the elongate flexible bladder blanket divider (49) and the ground (80).

2. The apparatus of claim 1, comprising an eradicating device selected from the group consisting of GPS (900), lights (810), sonar (820), radar (840), cameras (850), chemical injectors (860), robotic calipers (716), agitating devices (870), augers (880), drill heads (890), suction devices (900), video monitoring devices (910), and nozzles (920), inserted through the elongate flexible bladder blanket (49).

3. The apparatus of claim 1, wherein the temperature of the environment inside the apparatus is increased or decreased relative to the outside temperature by introducing heating or refrigerating fluids or gases into the open bores of the at least one vertical support (110).

4. The apparatus of claim 2, wherein the eradicating device is at least one chemical injector (860) for controlling the growth of the invasive species in the body of water (783) selected from the group consisting of invasive plant species, zebra muscles and combinations thereof.

5. The apparatus of claim 4, wherein the invasive species are selected from the group consisting of toxic caulerpa taxifolia, loosestrife, milfoil, ruffe and hydrilla.

6. A system for eradicating invasive species in contaminated bottoms of a body of water, comprising:
a water craft; and
an apparatus for eradicating invasive species as claimed in any of the preceding claims, wherein the water craft comprises a mechanical device for raising or lowering the apparatus.

7. A method of eradicating invasive species in contaminated bottoms of a body of water, comprising: providing an apparatus comprising: an elongate flexible bladder blanket divider (49) having first and second vertical ends (250, 255); an open bore vertical support (110) operably coupled to the first and second vertical ends (250, 255); the method being **characterised in that** each vertical end (250, 255) extends into the open bore vertical support (110) and rests on at least one apron bladder (104) of an apron bladder bundle (105), wherein the at least one apron bladder (104) is contained in the open bore vertical support (110) and at least one apron bladder (104) is between the vertical end of the elongate flexible bladder blanket divider (49) and the bottom (80) of the body of water so that the at least one apron bladder (104) releasably forms a seal with the bottom (80) of the body of water; resuspending contaminated sediment inside the apparatus; and removing the resuspended contaminated sediment, resulting in lowering the elongate flexible bladder blanket divider (49) so that chemicals may be introduced using chemical injectors (860) to eradicate the invasive species.

8. The method of claim 7, wherein removing the resuspended contaminated sediment results in greater than 95 percent by weight eradication of the invasive species.

9. The method of claim 7, wherein introducing chemicals, accelerators, decelerators, feeding, starving, precluding light or suffocating agents through openings in the bladder controls the growth of or kills the invasive species.

## Patentansprüche

1. Gerät (100) zur Ausrottung von invasiven Spezies, umfassend:
einen länglichen flexiblen Blasendeckentrenner (49) mit einem ersten und einem zweiten vertikalen Ende (250, 255); und
einen vertikalen Träger mit offener Bohrung (110), der operabel mit dem ersten und dem zweiten Ende (250, 255) verbunden ist; **dadurch gekennzeichnet, dass** sich jedes vertikale Ende in den vertikalen Träger mit offener Bohrung erstreckt und auf zumindest einer Schutzblase (104) eines Schutzblasenbündels (105) aufliegt, und
wobei die zumindest eine Schutzblase (104) im Träger mit offener Bohrung enthalten ist und sich jede Schutzblase (104) zwischen den vertikalen Enden (250, 255) des länglichen flexiblen Blasendeckentrenners (49) und dem Boden (80) befindet.

2. Gerät nach Anspruch 1, das eine Ausrottungsvorrichtung umfasst, die aus der aus GPS (900), Lampen (810), Sonar (820), Radar (840), Kameras (850), Chemikalieninjektoren (860), Greifrobotern (716), Rührvorrichtungen (870), Schneckenbohrern (880), Bohrköpfen (890), Saugvorrichtungen (900), Videoüberwachungsvorrichtungen (910) und Düsen (920) bestehenden Gruppe ausgewählt ist und die durch die längliche flexible Blasendecke (49) eingeführt ist.

3. Gerät nach Anspruch 1, wobei die Temperatur im Innenbereich des Geräts durch Einbringen von Heiz- oder Kühlflüssigkeiten oder -gasen in die offenen Bohrungen des zumindest einen vertikalen Trägers (110) im Vergleich zur Außentemperatur erhöht oder verringert ist.

4. Gerät nach Anspruch 2, wobei die Ausrottungsvorrichtung zumindest ein Chemikalieninjektor (860) zur Bekämpfung des Wachstums der invasiven Spezies im Wasserkörper (783) ist, die aus der aus invasiven Pflanzenspezies, Zebramuscheln und Kombinationen davon bestehenden Gruppe ausgewählt ist.

5. Gerät nach Anspruch 4, wobei die invasive Spezies aus der aus toxischer Caulerpa taxifolia, Weiderich, Tausendblatt, Kaulbarsch und Grundnessel bestehenden Gruppe ausgewählt ist.

6. System zur Ausrottung von invasiven Spezies in kontaminiertem Boden eines Wasserkörpers, umfassend:
ein Wasserfahrzeug; und
ein Gerät zur Ausrottung von invasiven Spezies nach einem der vorangegangenen Ansprüche,
wobei das Wasserfahrzeug eine mechanische Vorrichtung zur Anheben oder Absenken des Geräts umfasst.

7. Verfahren zur Ausrottung von invasiven Spezies in kontaminiertem Boden eines Wasserkörpers, umfassend: das Bereitstellen eines Geräts, das umfasst: einen länglichen flexiblen Blasendeckentrenner (49) mit einem ersten und einem zweiten vertikalen Ende (250, 255); einen vertikalen Träger mit offener Bohrung (110), der mit dem ersten und dem zweiten Ende (250, 255) operabel verbunden ist; wobei das Verfahren **dadurch gekennzeichnet, dass** sich jedes vertikale Ende (250, 255) in den vertikalen Träger mit offener Bohrung (110) erstreckt und auf zumindest einer Schutzblase (104) eines Schutzblasenbündels (105) aufliegt, wobei die zumindest eine Schutzblase (104) im Träger mit offener Bohrung (110) enthalten ist und sich jede Schutzblase (104) zwischen den vertikalen Enden des länglichen flexiblen Blasendeckentrenners (49) und dem Boden (80) des Wasserkörpers befindet, sodass die zumindest eine Schutzblase (104) eine lösbare Abdichtung mit dem Boden (80) bildet; das Resuspendieren eines kontaminierten Sediments im Gerät; und das Entfernen des resuspendierten kontaminierten Sediments, was zu einer Absenkung des länglichen flexiblen Blasendeckentrenners (49) führt, sodass mithilfe von Chemikalieninjektoren (860) Chemikalien eingebracht werden können, um die invasiven Spezies auszurotten.

8. Verfahren nach Anspruch 7, wobei das Entfernen des kontaminierten Sediments zur Ausrottung von mehr als 95 Gew.-% der invasiven Spezies führt.

9. Verfahren nach Anspruch 7, wobei das Einbringen von Chemikalien, Beschleunigern, Entschleunigern, Futter, Futterentzug, Lichtentzug oder Erstickungsmitteln durch Öffnungen in der Blase das Wachstum der invasiven Spezies bekämpft oder diese tötet.

## Revendications

1. Appareil (100) pour l'éradication d'espèces envahissantes, comprenant :
un diviseur de couverture de vessie flexible oblongue (49) ayant des première et seconde extrémités verticales (250, 255) ; et
un support vertical à alésage ouvert (110) fonctionnellement couplé aux première et seconde extrémités verticales (250, 255) ; et **caractérisé en ce que** chaque extrémité verticale s'étend dans le support vertical à alésage ouvert et repose sur au moins une vessie de tablier (104) d'un ensemble de vessies de tablier (105), et
où la au moins une vessie de tablier (104) se trouve dans le support vertical à alésage ouvert, et chaque vessie de tablier (104) se trouve entre les extrémités verticales (250, 255) du diviseur de couverture de vessie flexible oblongue (49) et le sol (80).

2. Appareil selon la revendication 1, comprenant un dispositif d'éradication sélectionné dans le groupe consistant en GPS (900), lumières (810), sonar (820), radar (840), caméras (850), injecteurs chimiques (860), calibres robotiques (716), dispositifs d'agitation (870), vis sans fin (880), têtes de forage (890), dispositifs d'aspiration (900), dispositifs de surveillance vidéo (910) et des buses (920), insérés à travers la couverture de vessie flexible oblongue (49).

3. Appareil selon la revendication 1, dans lequel la température de l'environnement à l'intérieur de l'appareil est augmentée ou diminuée relativement à la température extérieure en introduisant des fluides ou gaz de chauffage ou de réfrigération dans les alésages ouverts du au moins un support vertical (110).

4. Appareil selon la revendication 2, dans lequel le dispositif d'éradication est au moins un injecteur chimique (860) pour commander la croissance des espèces envahissantes dans la masse d'eau (783) sélectionnées dans le groupe consistant en espèces de plantes envahissantes, de moules zébrées et leurs combinaisons.

5. Appareil selon la revendication 4, dans lequel les espèces envahissantes sont sélectionnées dans le groupe consistant en caulerpa taxifolia toxique, salicaire, myriophylle, grémille et hydrille.

6. Système pour l'éradication d'espèces envahissantes dans des fonds contaminés de masses d'eau, comprenant :
une embarcation ; et
un appareil pour l'éradication d'espèces envahissantes tel que revendiqué dans l'une quelconque des revendications précédentes, où l'embarcation comprend un dispositif mécanique pour le relevage ou l'abaissement de l'appareil.

7. Procédé pour l'éradication d'espèces envahissantes dans des fonds contaminés d'une masse d'eau, comprenant : la réalisation d'un appareil comprenant un diviseur de couverture de vessie oblongue flexible (49) ayant des première et seconde extrémités verticales (250, 255) ; un support vertical à alésage ouvert (110) fonctionnellement couplé aux première et seconde extrémités verticales (250, 255) ; le procédé étant **caractérisé en ce que** chaque extrémité verticale (250, 255) s'étend dans le support vertical à alésage ouvert (110) et repose sur au moins une vessie de tablier (104) d'un ensemble de vessies de tablier (105), où la au moins une vessie de tablier (104) se trouve dans le support vertical à alésage ouvert (110) et au moins une vessie de tablier (104) se trouve entre l'extrémité verticale du diviseur de couverture de vessie oblongue flexible (49) et le fond (80) de la masse d'eau de sorte que la au moins une vessie de tablier précitée (104) forme d'une manière libérable un joint avec le fond (80) de la masse d'eau ; la re-suspension d'un sédiment contaminé à l'intérieur de l'appareil ; et le retrait du sédiment contaminé re-suspendu, se traduisant par un abaissement du diviseur de couverture de vessie oblongue flexible (49) de sorte que des produits chimiques peuvent être introduits en utilisant des injecteurs chimiques (860) pour éradiquer les espèces envahissantes.

8. Procédé selon la revendication 7, dans lequel le retrait du sédiment contaminé re-suspendu entraîne plus que 95 pour cent en poids d'éradication des espèces envahissantes.

9. Procédé selon la revendication 7, dans lequel l'introduction de produits chimiques, accélérateurs, décélérateurs, alimentation, privation de nourriture, empêchement de lumière ou d'agents d'étouffement à travers les ouvertures dans la vessie contrôle la croissance ou tue les espèces envahissantes.
